# EUROPEAN PATENT APPLICATION

(11) **EP 1 526 743 A2**
(43) Date of publication of application: **27.04.2005**
(21) Application number: 04396040.0
(22) Date of filing: 21.06.2004
(51) Int. Cl.: H04Q 3/00

(54) **Call queuing without additional charge**

(30) Priority: 23.10.2003 FI 20031556
(71) Applicant: Elisa OYJ, 00380 Helsinki (FI)
(72) Inventor: Fils, Henry, c/o Elisa Oyj, 00380 Helsinki (FI)
(74) Representative: Tiilikainen, Jarkko Tapio

(57) **Abstract**

The invention relates to a method for implementing queuing without a service charge in a telephone service, in which a service charge is made for the service. In the method, with the aid of an intelligent telephone network, charging of the service charge is made only once a notification concerning initiating charging is received from the telephone service. According to the invention, the notification concerning initiating charging of the service charge is received from outside of the telephone connection being charged.

## Description

The present invention relates to a method, according to the preamble of Claim 1, for implementing queuing without a supplementary charge in a telephone service.

Methods of this kind are used in telephone services, in which a service charge is made for a service, and in which it is possible that an incoming call may be placed in a queue, prior to commencement of the actual service.

Various telecommunications services require queuing systems, in which the expensiveness of the service means that, during queuing, the price of the local-network charge at most should be applied, the expensive service charge only being applied once the actual service starts. These requirements typically apply to various IT-sector, commercial sector, bank, and other similar expert and advice (help-desk) services. This need is particularly acute in services operating under so-called Premium-rate numbers (0600-, 0700-).

The services in question also receive a large amount of traffic requiring simultaneous queuing, even though the actual service may be rapid. A typical example is an Internet help-desk, which can receive thousands of calls when some network element crashes or becomes the target of an attack. In such situations, end-users, who have only a superficial knowledge of information technology, call the help-desk and are placed in a queue, or do not even reach the help-desk (thousands of callers). When the expert replies, the actual service takes only a moment. The customer's query receives the brief reply that the problem is in the network, not in the customer's equipment. In such situations, customers easily feel that they have been treated poorly, as queuing can cost, for example, 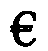 10,- and the actual service only 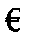 0,5.

Due to the telephone-network signalling systems used in Finland (and in other European countries), normal switching technology cannot be used to create queuing systems, in which there can be an 'infinitely' long queuing time at the local-network rate, the change to the expensive rate only coming once the actual service starts. This undesirable situation is due to the fact that the signalling standards etc. do not permit the call destination (the B subscriber, i.e. the subscription to which the call has been routed) to send signalling messages controlling charging to a public telephone network (PSTN). This decision was made for security reasons, as the network operator responsible for the network could no longer be responsible for the reliability of its charging, if the call destination alone could decide the price of a call.

On account of the above, the only way, according to the standard accepted by the PSTN network, to keep queuing cheap is to delay sending the 'answer' signal from the customer's terminal until the actual service starts. This is only possible for a certain time, typically 2-3 minutes. In calls originating abroad, the possible delay time may be only 1 minute. After this time, the caller's (A-subscriber's) switching centre, or one of the switching centres transmitting the call breaks the connection, unless an answer signal is given. Connecting the answer signal will also switch on the expensive charging, even though the service has not yet started.

Queuing systems are often located in the premises of the company providing the service, not in the PSTN network. The queuing system, on the other hand, is the only place that knows when the service really starts. However, in the standard solution, the queuing system has no possibility of notifying the start of the service, other than the aforementioned answer signal.

According to the prior art, the queuing problem can be resolved with the aid of an intelligent-network service, in which the queued calls are routed to a separate queuing server in the telephone network. Such solutions are disclosed in the publications EP 0 641 112 A2 and FI 106339 B. However, there are situations, in which it is not wished to use a separate queuing server, leading to a need for a solution to the problem of queuing without a supplementary charge also when not using a queuing server located in the telephone network. Such known solutions are examined below.

In the prior art, various solutions are implemented in the PSTN network, which all seek to give the destination (B subscriber) a limited possibility to control charging. They are all based on some element of the PSTN network that is able to send counting remaining, after the connection has been set up, to 'listen' to the call direction from the B subscriber, of the connection it has set up and, when it 'hears' a specific voice-frequency signal (DTMF), or a combination of signals, initiating charging in the direction of the A subscriber. The DTMF signal (combination of signals) is sent by the B subscriber (the actual person providing the customer with the service) once the customer's call has passed through the queue. The answer signal is given as soon as queuing starts, but the charge rate increases only after the DTMF signal is detected.

The principle of the system used at present is clarified further using the following description of the method as an example:
1) An A-subscriber calls the help-desk service number 0600-1234 and the call is routed to a switching centre (SSP) acting as a connection point for the intelligent network.
2) The SSP initiates the service program in the controller of the intelligent network, as a result of which the real number (xx-yyy) and routing prefix of the service provided are found and used to route the call, through the apparatus (IVR, Interactive Voice Response) participating in the rate change, to the service provider. In some cases, the SSP centre's 'Mid Call Trigger' functionality can be used instead of the IVR. However, this too is handled by a separate apparatus (integrated in the switching centre), so that the principle described does not change in this case either.
3) According to the SCP's direction, the SSP connects the call through the IVR to the subscription providing the service. This is typically a switchboard (PBX). The IVR begins to monitor the DTMF signals.
4) At the moment of connection to the queuing system, or (if there is no queue at that moment) to the answering location, the PBX sends an answer signal.
5) When the answer signal is received, the local-network rate is initiated and time-monitoring is set to zero, the call will now remain connected for as long as the A-subscriber cares to wait.
6) When the answering location replies, a DTMF signal or signal-series is sent from answering location.
7) When the DTMF signal (- signal series) is detected, the IVR initiates call charging. The expensive rate is now applied.

The method described above has the following drawbacks:
1) The method is unreliable, as a change of rate may be caused by a DTMF signal keyed-in by the A subscriber during queuing. After the transmission of the answer (during queuing), sounds travelling in the A→B direction are also mirrored in the B→A direction. An attempted workaround for this problem has been to use a DTMF signal series, instead of individual signals.
2) The A-subscriber can control the rate they receive, if the service has been implemented so as to allow the rate to be altered several times (e.g., cheap→expensive→cheap) and the A-subscriber discovers the signal combination by which this is done.
3) The network demands investment in an apparatus (IVR) that is used solely by variable-rate queuing calls.
4) From the point of view of the PSTN network, the number of calls that can be queued simultaneously is limited by both the capacity of the IVR and the number of lines in the customer's terminal (PBX, etc.). If the IVR device is used in 'pool operation', without it being dedicated customer-specifically (B-subscriber-specifically), queuing congestion for a single large user can use up the queuing capacity for all customers, in which case queuing will not function.

The invention is intended to create a new type of method for implementing queuing without a service charge. The invention is particularly intended to permit queuing independently of the telephone network's time monitoring, using the basic components of the telephone network, so that the queuing service can be implemented with less investment in equipment and will therefore be economical.

The invention is based on routing calls directly to the customer's equipment, which notifies initiation of the service directly to a telephone intelligent network, which connects the service charge to the call. The notification is sent outside of the telephone connection being charged.

This can be implemented, for example, using an embodiment, in which the device handling queuing (in our example, a queue server in the PBX equipment) notifies the device (SCP) controlling the rate, using a new call event unconnected to the call attempt to be queued, that the actual service is starting. Both during the queuing and during the actual service the rate is generated from the centre (SSP) controlled by the SCP. The SCP changes the rate when it receives the aforesaid notification. There can be several changes of rate. Each change requires the reception of a new call event from the queue server.

The call event can be a call attempt coming to a specific number, for example, or an agreed stimulus sent through the internet or other data-transfer network, for example, a text message with an agreed content to an agreed number.

More specifically, the method according to the invention is characterized by what is stated in the characterizing portion of Claim 1.

Considerable advantages are gained with the aid of the invention. The invention permits queuing independent of the telephone network's time monitoring to be implemented with the aid of the basic components of the intelligent telephone network. An IVR server or a similar server connected the telephone network is therefore not necessarily required to implement a queuing service, so that implementing the queuing service will require fewer equipment investments and will be economical.

With the aid of embodiments of the invention, the queuing capacity can also be significantly improved.

Compared to the known method described above, in which DTMF signals transmitted over a telephone connection were monitored, the embodiments of the invention provide the following advantages, among others:
- The method is reliable, as a change in rate can only be effected by a stimulus coming from the queuing equipment.
- A-subscribers cannot control the rate applied to them, as a change in rate can only be effected by a stimulus coming from the queuing equipment.
- No investments in telephone-network equipment are required.
- From the PSTN's viewpoint, the only limit to the number of calls that can be queued simultaneously is imposed by the number of lines of the customer's terminal device (PBX, etc.). On the network side, an obstacle will only arise if all of the switching centre's incoming or outgoing lines were to be busy - but in that case all calls, and not only queued calls, will naturally be prevented.

The concepts service charge and supplementary charge thus refer to a charge that the telephone service provider makes for a value-added service, i.e. for the actual telephone service, which the caller attempts to obtain from the service number. Correspondingly, the terms without a service charge, or without a supplementary charge refer to a situation and period of time, for which a service charge or supplementary charge is not made. Thus, queuing without a supplementary charge, or a service charge can refer to the fact that, as far as queuing is concerned, the call is completely free of charge, or that, as far as queuing is concerned, a local-network charge, or other normal connection charge is made.

In the following, the invention is examined with the aid of examples and with reference to the accompanying drawing.

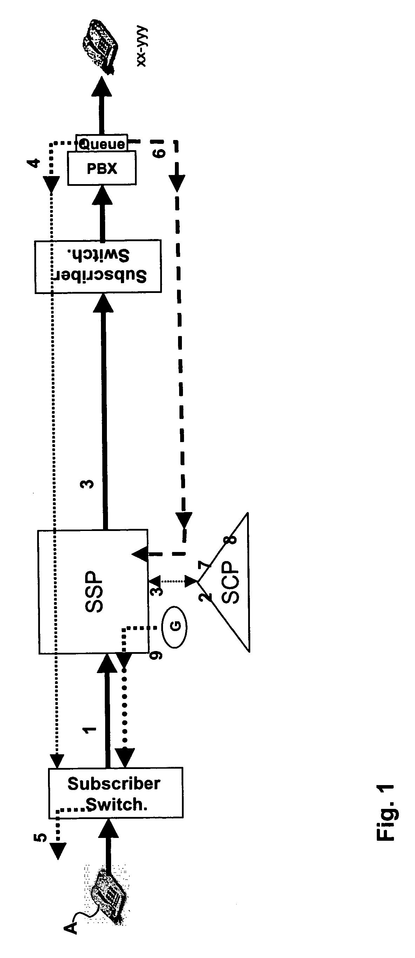

Figure 1 shows schematically one method according to the invention, in connection with one possible system configuration.

The system configuration of Figure 1 includes a conventional intelligent telephone network and the telephone system of the company providing a telephone service subject to a charge. In addition, the figure shows the terminal device A of a subscriber (A-subscriber) calling the telephone service subject to a charge. The intelligent telephone network of Figure 1 includes a service switching point SSP and a service control point SCP, which controls the operation of the SSP. In addition, local switching entities, which operate under some SSP belonging to the telephone network, are connected to the telephone operator's system. In the system of Figure 1, the intelligent telephone network also includes an element G, which is termed the high-rate generator. The element G is typically implemented by software means. The telephone system of the company providing the telephone service includes a company switchboard PBX, to which the queuing service functionality Queue is connected, as well as the desired number of answer locations xx-yyy.

Once the SCP and PBX in the system of Figure 1 have been programmed to exchange queuing/service information, the following type of method can be implemented with the aid of the system configuration:
1) An A-subscriber calls the help-desk service number 0600-1234, in which case the call is routed to the switching centre (SSP) acting as a switching point for the intelligent network.
2) The SSP initiates the service program (Program_A) in the intelligent-network controller SCP, as a result of which the real number (xx-yyy) of the service provider is found and an individual identifier (e.g., a four-digit number) is generated for the call. The identifier is needed to identify the queued call when emptying the queue (see Section 7).
   Program_A sets the global variable 'QS_servno_zzzz' to the position 'in_queue'. The title of the variable is formed of the following components:
   QS_ = general title for all local-network charge queue variables
   servno = number of service number (for example, 06001234)
   zzzz = generated individual identifier.

   In this way, 10 000 queued calls can be set simultaneously for each service. If, for any reason, more queuing possibilities are required for the service, the number can be easily increased by increasing the length of the individual identifier (5-digit identifier = 100 000 calls in queue, 6-digit = 1 000 000 calls, etc.).
3) Program_A of the SCP commands the SSP to connect the call to the subscription providing the service. Typically this is a switchboard (PBX). At the same time, the SSP's rate setting is set (using an INAP-signalling SCI operation) to the price of the local-network charge (=do not generate rate, local-network rate generated in the A-subscriber's switching centre).
   In the switching centre (CON-operation), the previously generated individual identifier is sent in a suitable field of an IAM-signalling message. The fields used can be, for example, fields containing the A-subscriber's number, or the numbers of the transmitters of the call), or the field containing the B number (in this case, the identifier is added to the end of the actual number).
   Program_A remains monitoring (in a program loop) the content of the variable 'QS_servno_zzzz'. A suitable check interval is about 1 second. The operations when the value of the variable change are described in Section 8.
4) At the moment of connection to the queuing system, or (if there is no queue at that moment) through the queuing system to an answer location, the PBX sends the subscriber switching entity an answer signal. At the same time, the queuing system picks the individual identifier, sent in Section 3, into its memory.
5) The received answer signal initiates the local-network-charge rate and sets the time monitoring to zero. The call now remains connected for as long as the A-subscriber cares to wait.
6) When an answer location answers, the queue server constructs a new outgoing call attempt to send the set 'change_rate' information to the SCP. The call is then constructed to a previously agreed (trigger) number, for example, the number 0600-9999. The queuing system adds the individual identifier it received in Section 3 to the end of the dialled number (the total number dialled is thus 0600-9999-zzzz).
7) Program_B initiated in the 0600-9999 trigger number detects from the A-subscriber's number which service the 'change_rate' information concerns, forms from this the 'servno' portion of the variable QS_servno_zzzz and picks the four last numbers of the B number, to form from them the 'zzzz' portion of the variable QS_servno_zzzz. In this way, the variable title QS_06001234_zzzz of Section 2 is formed and Program_B is able to address the variable and set it to the value 'change_rate'.
8) When Program_A, which connected the call to the queue, detects that the value of the variable QS_06001234_zzzz has changed from the value 'in_queue' to the value 'change_rate', it sends the SSP a charging-control command (SCI operation), which contains the desired rate for this service, using the first rate setting. If several sequentially varying rates (e.g., cheap→expensive→cheap) are used in the service, Program_A remains (in a program loop) monitoring possible new settings and places information 'rate_1_set' on a suitable parameter in the memory. This information is needed when new 'change_rate' information arrives, so that the first rate will not be set again, but instead the rate following it. Alternatively, the rate can also be controlled directly, by sending the value 0600-9999-zzzz_nn, instead of the value 0600-9999-zzzz. Here, the two extra numbers nn directly state the rate setting that the service provider wishes to set in effect this time, this being the value that Program_B sets as the 'change_rate' information of Program_A.
   If several sequential varying rates are not used in the service, Program_A terminates its (loop) operation once the rate is set. The call is charged at the set rate, until the connection is closed by the A or B-subscriber.
9) The SSP begins transmitting the rate to the A-subscriber.

If it is wished to change the rate for the connection again (for example, if the service changes on the service provider's side), the queuing service sends a second outgoing call attempt to bring the new rate into effect, i.e. Sections 6 - 9 are repeated. It is therefore possible to make an endless number of rate changes during the same call.

Using the method described above, each premium_rate service can thus have its own call price and a desired number of different prices per service. The prices can also be changed during the same call as often as desired.

In the example of Figure 1, the situation initiating the stimulus is described as a call starting from the direction of the queuing server. However, a stimulus for a rate change can be given over any available information connection. Other forms of connection are, for example, an exchange of messages taking place over the Internet, an SMS message, and WAP settings.

Though the method of Figure 1 describes only a rate change in an individual queued call, the control method can also be used to transmit centralized information from the terminal (e.g., the queuing system) that is used to control the total operation of the service.

As an example, reference can be made to an application, in which, when the waiting time of the queuing system becomes too long, the queuing system of the original answer location constructs a call to the number 0600-9999-zzzz_nn, in which nn = 99. In the Programs_A and _B of the service, this is arranged to signify 'place traffic in reserve answer location, queuing time exceeded'. Program_B then transmits the information to Program_A. Calls arriving after this are routed to a reserve answering location (and its queuing equipment). Once the queuing time (number of calls queued) drops below the original answer location's threshold value, the original answer location queuing system constructs a call to the number 0600-9999-zzzz_nn, in which nn = 98. In the Programs_A and _B of the service, this is agreed to signify 'return traffic to original answer location, queue no longer congested'. Program_B then transmits the information to program_A and program_A returns the traffic to the original answer location.

Even though in the method control of the intelligent telephone network's centralized controller (SCP) and the switching entity controlled by it (SSP) is described as being controlled by a terminal (PBX or other) in the possession of the customer, over a connection not connected to the actual connection being controlled, the method can also be applied to the control of centralized controller elements of future NGN networks. These include Softswitch servers, SIP servers, Proxy servers, and Application servers.

On the basis of the examples disclosed above, it is obvious that numerous solutions differing from the embodiments described above can be implemented within the scope of the invention. The invention is thus not intended to be restricted to concern only the examples disclosed above, but instead the scope of protection of the patent should be examined over the full extent of the accompanying Claims.

## Claims

1. A method for implementing queuing without a service charge in a telephone service, in which a service charge is made for the service, and in which method, with the aid of an intelligent telephone network, initiation of the service charge is made only once a notification concerning initiating charging is received from the telephone service, **characterized in that** the notification concerning initiating charging of the service charge is received from outside of the telephone connection to be charged for.

2. A method according to Claim 1, **characterized in that** a call dialled to the number of the telephone service is routed directly to the switching-centre system of the provider of the telephone service, without the call being routed through an IVR device or corresponding server belonging to the public telephone network.

3. A method according to Claim 2, **characterized in that** an answer-back signal is received from the switching-centre system of the provider of the telephone service and charging for the call without a service charge being applied is initiated.

4. A method according to any of Claims 1-3, **characterized in that**, during the call, at least one second notification concerning the initiation of charging is received from the telephone service and, on the basis of the notification, charging the service charge at a first rate is terminated.

5. A method according to any of Claims 1-3, **characterized in that**, during the call, at least one second notification concerning the initiation of charging is received from the telephone service and, on the basis of the notification, charging the service charge at a first rate is terminated and charging the service charge at a second rate is initiated.

6. A method according to any of Claims 1-5, **characterized in that** the notification concerning the initiation of charging the service charge is received through a separate call or call attempt, or as an SMS message.

7. A method according to Claim 6, **characterized in that**, in the intelligent telephone network, the A-subscriber identifier relating to the separate call, call attempt, or SMS message is used as the basis for identifying the service provider whose queue contains the call to which the received notification relates.

8. A method according to any of Claims 1-5, **characterized in that** the notification concerning the initiation of charging the service charge is received by means of a fixed-form message transmitted through data-communications network, such as the Internet.

9. A method according to any of Claims 1-8, **characterized in that** the notification concerning the initiation of charging the service charge contains an individuation identifier, which identifies the call connection to the queue, to which the notification relates.

10. A method according to any of Claims 1-9, **characterized in that** the notification concerning the initiation of charging the service charge contains information as to which charge, i.e. rate is to be applied to call.

11. A method according to any of Claims 1-10, **characterized in that** the rate is controlled several times during the same call connection, by repeating the notification concerning the initiation of charging the service charge.

12. A method according to any of Claims 1 - 11, **characterized in that**, in addition to information relating to charging, information relating to service control or call routing is also transmitted in a corresponding manner to the intelligent telephone network.

13. A method according to any of Claims 1-12, **characterized in that** the telephone service is provided in a switching-centre system outside of the public telephone network, or in some other device, which belongs to the telephone service provider.

14. A method according to any of Claims 1-13, **characterized in that** queuing is implemented in a switching-centre system outside of the public telephone system, or in some other device, which belongs to the telephone service provider.

15. A method according to any of Claims 1-14, **characterized in that** the charging of the service charge is performed by a switching centre (SSP) controlled by a controller (SCP) of an intelligent telephone network and charging is performed according to the information content of a notification received from a terminal of the telephone service provider.

16. A method according to any of Claims 1-15, **characterized in that** control information for the charging of the service charge for the telephone service is sent from the terminal of the service provider, outside of the call connection being charged.
